Europäisches Patentamt

(19) European Patent Office

Office européen des brevets

(11) Publication number: **0 127 662**
**B1**

(12) **EUROPEAN PATENT SPECIFICATION**

(45) Date of publication of patent specification: **12.11.86**

(51) Int. Cl.⁴: **A 61 C 8/00**

(21) Application number: **84900117.7**

(22) Date of filing: **05.12.83**

(86) International application number:
**PCT/NL83/00048**

(87) International publication number:
**WO 84/02264 21.06.84 Gazette 84/15**

(54) **DENTAL IMPLANT.**

(30) Priority: **06.12.82 NL 8204714**

(43) Date of publication of application:
**12.12.84 Bulletin 84/50**

(45) Publication of the grant of the patent:
**12.11.86 Bulletin 86/46**

(84) Designated Contracting States:
**AT BE CH DE FR GB LI LU NL SE**

(56) References cited:
**FR-A-2 040 781**
**US-A-2 857 670**
**US-A-4 186 486**

(73) Proprietor: **TON, Michael Andreas**
**Badhuisstraat 45**
**NL-4381 LN Vlissingen (NL)**

(72) Inventor: **TON, Michael Andreas**
**Badhuisstraat 45**
**NL-4381 LN Vlissingen (NL)**

(74) Representative: **van der Beek, George Frans**
**et al**
**Nederlandsch Octrooibureau Johan de Wittlaan**
**15 P.O. Box 29720**
**NL-2502 LS 's-Gravenhage (NL)**

Courier Press, Leamington Spa, England.

**Description**

The invention relates to a dental implant comprising an elongate body including at one end thereof a root portion having means adapted to anchor the implant to the jawbone tissue and at the other end a connecting portion adapted to connect the dental implant to a prosthetic dental crown or denture, the implant having a hollow cavity extending internally of the body from the connecting portion to the root portion, said root portion being provided with perforations in its external wall surrounding said cavity.

US—A—4 186 486 discloses a dental implant as defined above. The hollow cavity of these known dental implants of non-metallic, pliable material contains a bone growth stimulating biochemical matrix which should stimulate the growth of bone tissue into the openings of the root portion for firm attachment of the device.

Further, from Dutch patent application 66,03182 dental implants of ceramic material like metal oxides especially aluminum oxide, -silicates, -carbides, -borides, -nitrides, -silicides or glass are known. These implants, having e.g. the shape of pins, are inserted in hollow root canals.

However, after the implantation of the known dental implants whereby the dental implant is partly in the body ("milieu interieur") and partly outside the body ("milieu exterieur"), as a rule infections frequently occur because the transition region of "milieu interieur" to "milieu exterieur" is a "porte d'entrée" for pathogenic bacteria and other pathogenic germs. At this "porte d'entrée" the bacteria etc. coming out of the oral cavity which in view of the temperature and humidity present therein is an ideal breeding place for bacteria, penetrate into the body against the plasma stream. The body reacts thereon by starting a defensive reaction inducing the forming of pus. Because of these defensive reactions and the complications belonging thereto normally the placed implant loosens or should even be removed for stopping a steady expanding infection.

The invention is aimed at the overcoming of the abovementioned drawbacks so that the chances of survival of an implanted implant can be improved substantially.

It was found that the above described disadvantage of the known dental implants can be removed by a dental implant as indicated above wherein the free end of the connecting portion has an open section whereby the cavity is in connection with the outside and said open section is provided with a removable closure means so that in this cavity a medicant can be applied.

More in particular, in this cavity a medicant like an antibiotic can be applied which via the perforations present in the wall of the root portion will leave the cavity of the implant by diffusion/osmosis and will be carried away with the plasma stream in the dirction of the "milieu interieur/milieu exterieur". Therefore a considerable concentration of antibiotic is present at the transition region of "milieu interieur/milieu exterieur" so this "porte d'entrée" for bacteria etc. is closed. Normally an antibiotic having a broad spectrum like gentamycin is used.

Apart from the abovementioned advantage the implants according to the invention have the possibility for allowing instantaneous views of the condition of the implanted implant at any time. By removing the removable closing means one may carry out a puncture in the implant after which by means of a laboratory test it can be determined which bacteria/cells are present in the implant. In case of the presence of undesired bacteria/cells in the implant it is possible to combat these undesired bacteria/cells by means of a specific medicine. Therefore with the implants according to the invention it is possible to check constantly the condition of the implant and if desired to influence it. Further, it is possible to replenish or to replace the antibiotic present in the implant after some time e.g. at the half yearly check so that an optimum protection of the implant is guaranteed.

The implant according to the invention is preferably made of metal, e.g. dental gold having the composition of 65—85% gold, 1—4% palladium, 1—10% platinum, 10—15% silver, 0—10% copper and 0—1% zinc. As marketed dental gold metals are mentioned: "Degudent-G"® (98% noble metal alloy) and "Permador"®. In addition to the above alloys other noble metal alloys are also suitable. Apart from noble metal alloys other inert alloys having a good resistance against corrosion as well as against strong mechanical loads can also be used e.g. alloys on the basis of cobalt, chromium, titanium and molybdenum respectively on the basis of chromium, cobalt and nickel.

The fixing means of the root portion of the implant is preferably a screw thread of great pitch.

The removable closing means for the cavity of the implant is preferably a screw cap which can be screwed on the free end of the connecting portion of the implant. However, other closing means can also be used which depend on the prothesis later to be used on behalf of the rehabilitation of the set of teeth which are under treatment.

The diameter of the perforations in the wall of the root portion of the implant according to the invention should have such a size that a sufficient passage of body fluids may take place. However, the diameter and the number of perforations are limited by the fact that the structural strength of the implant should be considerable in view of the forces which can be expected after the implantation of the implant in the bone. So an univocal indication of the diameter and number of perforations cannot be given since they are also dependent on the material of the implant in question.

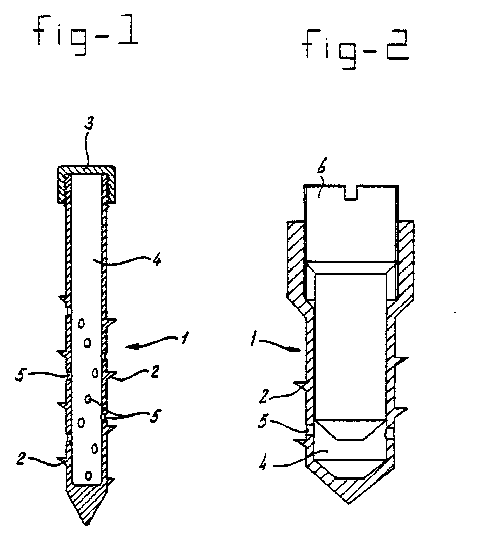

An embodiment of the implant according to the invention is illustrated in longitudinal section in the enclosed figure 1 in which the implant of the screw pin type (1) made of dental gold comprises a cavity (4) which extends from the connecting portion into the root portion. The root portion has been provided with a screw thread (2) having a great pitch. The wall of the hollow implant has a thickness of at least 0.4 mm. Further the wall of the root portion is provided with one or more perforations (5) having a diameter of 0.5—1 mm. The free end of the connecting portion of the implant is supplied with a screw thread for closing the cavity by means of the screw cap (3).

Further the invention includes a dental prothesis like an artificial tooth, bridge or a complete upper respectively lower set of artificial teeth when attached to one or more of the implants according to the invention and the cavity of the implant respectively implants mounted in the bone is/are supplied with an antibiotic. From the experiences gained up to now it has appeared that such dental protheses on the basis of the implants according to the invention do have an optimum lifetime.

When in the post implant period it is definitely clear that the implant is settled and there is no more need for a local antibiotic, the cavity inside the implant may be occluded by an obturator (closing the perforations) which is screwed in (clockwise) (vide figure 2 illustrating among others an embodiment of the obturator having number (6), whereas the numbers (1), (2), (4) and (5) have the meanings mentioned above).

Once the need arises to utilise a local antibiotic again, the obturator may easily be extracted from the cavity by screwing the obturator out (counter clockwise). The cavity is again ready to receive an antibiotic filling and is for instance closed by screwing a screw cap on the top of the implant.

## Claims

1. Dental implant (1) comprising an elongate body including at one end thereof a root portion having means (2) adapted to anchor the implant to the jawbone tissue and at the other end a connecting portion adapted to connect the implant to a prosthetic dental crown or denture, the implant having a hollow cavity (4) extending internally of the body from the connecting portion to the root portion, said root portion being provided with perforations (5) in its external wall surrounding said cavity, characterized in that the free end of the connecting portion has an open section whereby the cavity is in communication with the outside and in that said open section is provided with a removable closure means (3).

2. Dental implant according to claim 1, characterized in that the implant is made of metal or metal alloy.

3. Dental implant according to claim 1 or 2, characterized in that the implant is made of dental gold or another noble metal alloy.

4. Dental implant according to claim 1, characterized in that the implant is made of a titanium alloy.

5. Dental implant according to any one of the claims 1—4, characterized in that the fixing means (2) of the root portion is a screw thread.

6. Dental implant according to any one of the claims 1—5, characterized in that the removable closing means (3) is a screw cap which can be screwed on the free end of the connecting portion.

7. Dental implant according to any one of the claims 1—3, 5 and 6, characterized in that the implant is made of dental gold, the cavity in the implant has a diameter of 2—2.5 mm, the wall of the hollow implant has a thickness of at least 0.4 mm and the perforations in the wall of the root portion have a diameter of 0.5—1 mm.

8. Dental prosthesis attached to one or more implants according to any one of the claims 1—7, characterized in that the cavity (4) of the implant respectively implants contains a medicant.

## Patentansprüche

1. Zahnärztliches Implantat (1) mit einem länglichen Körper, der an einem seiner Enden einen Wurzelteil mit Mitteln (2) zum Verankern des Implantats in das Kiefergewebe und am anderen Ende einen Verbindungsteil zum Verbinden des Implantats mit einer Zahnkronen- oder Zahnprothese umfasst, wobei das Implantat einen Hohlraum (4) aufweist, der sich innerhalb des Körpers vom Verbindungsteil bis zum Wurzelteil erstreckt, wobei dieser Wurzelteil mit Perforationen (5) in seiner den Hohlraum umschliessenden äusseren Wandung versehen ist, dadurch gekennzeichnet, dass das freie Ende des Verbindungsteils einen offenen Abschnitt aufweist, so dass der Hohlraum mit aussen in Verbindung ist, und dass in diesem offenen Abschnitt ein entfernbares Mittel zum Schliessen (3) vorgesehen ist.

2. Zahnärztliches Implantat nach Anspruch 1, dadurch gekennzeichnet, dass das Implantat aus Metall oder Metallegierung gefertigt ist.

3. Zahnärztliches Implantat nach Anspruch 1 oder 2, dadurch gekennzeichnet, dass das Implantat aus Zahngold oder einer anderen Edelmetalllegierung gefertigt ist.

4. Zahnärztliches Implantat nach Anspruch 1, dadurch gekennzeichnet, dass das Implantat aus Titanlegierung gefertigt ist.

5. Zahnärztliches Implantat nach einem der Ansprüche 1—4, dadurch gekennzeichnet, dass das Befestigungsmittel (2) des Wurzelteils ein Schraubengewinde ist.

6. Zahnärztliches Implantat nach einem der Ansprüche 1—5, dadurch gekennzeichnet, dass das entfernbare Mittel zum Schliessen (3) ein Deckel zum Verschrauben ist, der auf das freie Ende des Verbindungsteils aufgeschraubt werden kann.

7. Zahnärztliches Implantat nach einem der Ansprüche 1—3, 5 und 6, dadurch gekennzeichnet, dass das Implantat aus Zahngold gefertigt ist, der Hohlraum im Implantat einen Durchmesser von 2—2,5 mm, die Wandung des hohlen Implantats eine Dicke von mindestens 0,4 mm und die Perforationen in der Wandung des Wurzelteils einen Durchmesser von 0,5—1 mm aufweisen.

8. Zahnprothese, die an einem oder mehreren Implantaten gemäss einem der Ansprüche 1—7 befestigt ist, dadurch gekennzeichnet, dass der Hohlraum (4) des Implantats bzw. der Implantate ein Arzneimittel enthält.

**Revendications**

1. Implant dentaire (1) comportant un corps allongé comprenant en l'une des ses extrémités une portion de racine munie de moyens (2) pour ancrer l'implant au tissu de la mâchoire et en son autre extrémité une portion de connexion pour relier l'implant à une couronne dentaire ou dent de prothèse, l'implant présentant une cavité (4) qui s'étend à l'intérieur du corps depuis la portion de connexion jusqu'à la portion de racine, cette portion de racine étant pourvue de perforations (5) en sa paroi extérieure qui entoure cette cavité, caractérisé en ce que l'extrémité libre de la portion de connexion présente un tronçon ouvert, de telle sorte que la cavité se trouve en communication avec l'extérieur, et qu'il est prévu dans ce tronçon ouvert un moyen amovible de fermeture (3).

2. Implant dentaire selon la revendication 1, caractérisé en ce que l'implant est fait de métal ou d'alliage métallique.

3. Implant dentaire selon la revendication 1 ou 2, caractérisé en ce que l'implant est fait d'or dentaire ou autre alliage de métal noble.

4. Implant dentaire selon la revendication 1, caractérisé en ce que l'implant est fait d'alliage de titane.

5. Implant dentaire selon l'une quelconque des revendications 1—4, caractérisé en ce que le moyen de fixation (2) de la portion de racine est un filet de vis.

6. Implant dentaire selon l'une quelconque des revendications 1—5, caractérisé en ce que le moyen amovible de fermeture (3) est un couvercle à vis que l'on peut visser sur l'extrémité libre de la portion de connexion.

7. Implant dentaire selon l'une quelconque des revendications 1—3, 5 et 6, caractérisé en ce que l'implant est fait d'or dentaire, la cavité située dans l'implant présente un diamètre de 2—2,5 mm, la paroi de l'implant creux présente une épaisseur d'au moins 0,4 mm et les perforations pratiquées dans la paroi de la portion de racine présentent un diamètre de 0,5—1 mm.

8. Prothèse dentaire fixée à un ou plusieurs implants selon l'une quelconque des revendications 1—7, caractérisée en ce que la cavité (4) de l'implant resp. des implants contient un médicament.

fig-1

fig-2